# FASCICULE DE BREVET EUROPEEN

(11) **EP 1 124 421 B1**
(45) Date de publication et mention de la délivrance du brevet: **21.05.2003**
(21) Numéro de dépôt: 99950879.9
(22) Date de dépôt: 29.10.1999
(51) Int. Cl.: A01N 43/80, A01N 25/22

(54) **COMPOSITIONS HERBICIDES A BASE DE GLYPHOSATE ET D'ISOXAZOLES**
GLYPHOSAT UND ISOXAZOLE ENTHALTENDE HERBIZIDE ZUSAMMENSETZUNGEN
NOVEL HERBICIDE COMPOSITIONS BASED ON GLYPHOSATES AND ISOXAZOLES

(30) Priorité: 02.11.1998 FR 9813897
(43) Date de publication de la demande: 22.08.2001
(73) Titulaire: Bayer CropScience S.A., 69009 Lyon (FR)
(72) Inventeur: PEREZ, Gilbert, Antoine, F-69580 Sathonay Camp (FR); PILLET, Louis, F-69410 Champagne au Mont d'Or (FR); FEBVRE, Jean-Claude, F-69140 Rillieux la Pape (FR); LAVAULT, Sylvie, F-69003 Lyon (FR)
(74) Mandataire: Rippel, Hans Christoph, Dr.
(86) Numéro de dépôt international: FR9902648
(87) Numéro de publication internationale: WO00025584

(56) Documents cités:
- EP-A- 0 498 145
- WO-A-90/07275
- WO-A-92/12637
- WO-A-98/02562
- DATABASE CAPLUS [Online] DE RUITER ET AL.: "Influence of surfactants and ammonium sulfate on glyphostae phytotoxicity to quackgrass (Elytrigia repetens)" retrieved from STN, accession no. 1997:109147 Database accession no. 126:128224 XP002107733 & WEED TECHNOL, vol. 10, no. 4, 1996, page 803-808
- DATABASE CAPLUS [Online] BLAIR A.M.: "Addition of ammonium salts or a phosphate ester to herbicides to control Agropyron repens" retrieved from STN, accession no. 1975:542857 Database accession no. 83:142857 XP002107734 & WEED RES., vol. 15, no. 2, 1975, page 101-105
- DATABASE CAPLUS [Online] SUWUNNAMEK ET AL.: "control of Cyperus rotundus with glyphosate. Influence of ammonium sulfate and other additives" retrieved from STN, accession no. 1975:509660 Database accession no. 83:109660 XP002107735 & WEED RES., vol. 15, no. 1, 1975, pages 13-19,

## Description

La présente invention concerne une nouvelle composition herbicide comprenant l'association de deux herbicides, un herbicide de la famille des isoxazoles et un herbicide de la famille du glyphosate, avec un activateur biologique pour l'herbicide de la famille du glyphosate. La nouvelle composition selon l'invention est particulièrement appropriée pour une application sur les plantes génétiquement modifiées pour les rendre tolérantes aux herbicides de la famille du glyphosate et le cas échéant pour les rendre également tolérantes aux herbicides de la famille des isoxazoles.

Les herbicides de la famille du glyphosate sont des herbicides systémiques totaux qui agissent dans les plantes en inhibant une enzyme essentielle à la vie des plantes, entrant dans la voie de biosynthèse des acides aminés aromatiques, la 5-enol pyruvylshikimate-3-phosphate synthase (EPSPS). On ne connaît pas de plantes naturellement tolérantes aux herbicides de la famille du glyphosate ce qui limite leur usage à des applications dans les champs avant l'ensemencement, ou aux zones non cultivées, comme par exemple les voies de chemin de fer ou les bords de route.

Le développement des technologies de génie génétique et plus particulièrement des technologies de transformation des plantes par génie génétique a permis de développer dès les années 80 des technologies destinées à rendre les plantes, et plus particulièrement les plantes de culture tolérantes aux herbicides de la famille du glyphosate. Le développement de ces nouvelles technologies a permis l'aboutissement depuis les années 95 à la commercialisation de semences de plantes de culture tolérantes aux herbicides de la famille du glyphosate. Il s'agit notamment des cotons et des sojas commercialisés sous la dénomination Roundup Ready (marque déposée de la société MONSANTO), modifiés afin de les rendre tolérants aux herbicides de la famille du glyphosate par l'introduction d'un gène codant pour une EPSPS modifiée. D'autres plantes sont sur le point d'être mises sur le marché avec une technologie de tolérance identique ou différente, notamment le colza et le maïs, alors que d'autres plantes sont en cours de développement.

Par plantes génétiquement modifiées pour les rendre tolérantes aux herbicides de la famille du glyphosate, on entendra dans la présente demande de brevet toute plante issue d'une plante transformée, dont le génome a été modifié par génie génétique pour la rendre insensible aux herbicides de la famille du glyphosate. En particulier, de telles plantes auront été modifiées par l'introduction d'au moins un gène chimère comprenant une séquence codant pour une enzyme de tolérance au glyphosate, sous le contrôle d'éléments de régulation hétérologues en 5' et 3' fonctionnels dans les cellules végétales et les plantes. Les enzymes de tolérance au glyphosate et les gènes chimères utiles pour leur expression dans les plantes afin de les rendre tolérantes aux herbicides de la famille du glyphosate sont notamment décrits dans les brevets et demandes de brevet suivant : US 4,940,835, US 4,971,908, US 5,145,783, US 5,188,642, US 5,310,677, US 5,312,910, US 5,510,471, US 5,633,435, US 5,627,061, US 5,633,448 et WO 97/04103.

Le développement de ces plantes génétiquement modifiées pour les rendre tolérantes ouvre le champ à de nouveaux champs d'application des herbicides de la famille du glyphosate, avec de nouveaux problèmes techniques, notamment liés à l'application de l'herbicide sur des plantes de culture sans les dégrader, tout en conservant une forte efficacité sur les mauvaises herbes.

Par plante, on entendra dans la présente demande de brevet toute plante ou tout organisme multicellulaire différencié capable de photosynthèse, en particulier monocotylédones ou dicotylédones, plus particulièrement des plantes de culture destinées ou non à l'alimentation animale ou humaine, comme le maïs, le blé, le colza, le soja, le riz, la canne à sucre, la betterave, le tabac, le coton, le trèfle, etc., de préférence le maïs ou le soja, plus préférentiellement le soja.

Si les herbicides de la famille du glyphosate sont connus pour avoir un large spectre d'action, ils présentent néanmoins plusieurs inconvénients liés à leur absence de persistance dans les champs, d'où une action limitée dans le temps, et une vitesse d'action limitée. Pour contrecarrer ces inconvénients, il est connu d'associer les herbicides de la famille du glyphosate d'une part avec un herbicide plus persistant ayant un spectre d'action complémentaire de celui des herbicides de la famille du glyphosate, et d'autre part avec un activateur biologique qui va permettre d'améliorer l'activité biologique des herbicides de la famille du glyphosate, en particulier en favorisant la pénétration de l'herbicide dans les feuilles augmentant sa vitesse d'action. L'emploi de ces activateurs biologiques comme la combinaison avec d'autres herbicides ont été largement décrits dans la littérature (notamment E. Grossbaerd & D. Atkinson, *The* *Herbicide Glyphosate*, Butterworth & Co. (Publishers) Ltd, 1985).

Les isoxazoles sont une nouvelle famille d'herbicides agissant sur une enzyme impliquée dans la voie de biosynthèse de l'homogentisate, l'hydroxy-phényl pyruvate dioxygénase (HPPD), dont l'inhibition conduit au blanchiment des plantes sensibles à ces herbicides. Les herbicides de la famille des isoxazoles sont notamment décrits dans les demandes de brevet et brevets suivants : EP 418 175, EP 487 357, EP 527 036, EP 560 482, WO 94/14782, US 5,371,064, US 5,371,063, US 5,371,063, US 5,489,064, US 5,656,573, dont le contenu est incorporé ici par référence. Ces herbicides ont une activité persistante et pour certaines cultures une action complémentaire de celle du glyphosate.

Certains herbicides de cette famille, comme l'isoxaflutole, sont sélectifs vis à vis de certaines plantes de grandes cultures et peuvent être employés tels quels sur des plantes comme le maïs. On connaît en outre le moyen de conférer aux plantes une tolérance améliorée aux herbicides de la famille des isoxazoles par génie génétique en introduisant dans le génome des dites plantes un gène codant pour une HPPD, sous le contrôle d'éléments de régulation en 5' et 3' fonctionnels dans les cellules végétales et les plantes. Ces gènes conférant une tolérance améliorée aux herbicides inhibiteurs d'HPPD, et plus particulièrement aux herbicides de la famille des isoxazoles sont notamment décrits dans les demandes de brevet suivantes : WO 96/38567, FR 97 14569 déposée le 17novembre 1997 et FR 96 16726 déposée le 24 décembre 1997. On connaît même des plantes présentant une double tolérance obtenue par génie génétique, d'une part aux herbicides de la famille du glyphosate et d'autre part aux herbicides inhibiteurs d'HPPD, en particulier de la famille des isoxazoles, décrites dans la demande de brevet WO 98/02562.

Par plante tolérante aux herbicides de la famille des isoxazoles, on entend selon l'invention toute plante tolérante aux dits herbicides, qu'elles soient naturellement tolérantes ou rendues tolérantes après transformation par génie génétique.

Avec des plantes présentant à la fois des propriétés de tolérance aux herbicides de la famille du glyphosate, issues d'une transformation par génie génétique, et des propriétés de tolérance aux herbicides de la famille des isoxazoles, soit naturellement soit issues d'une transformation par génie génétique, il est possible d'appliquer simultanément les herbicides de ces deux familles non seulement en prélevée, mais aussi en postlevée. De tels traitement sont notamment décrits dans la demande de brevet US 08/969,032, déposée le 12 novembre 1997, dont le contenu est incorporé ici par référence.

Dans ce but, on a cherché à développer des compositions d'herbicides faciles d'emploi comprenant de fortes concentrations en herbicides des deux familles pour une application simultanée, et notamment des compositions solides diluables ou dispersables dans l'eau. Il est toutefois apparu que ces formulations présentaient des problèmes importants de stabilité chimique de leurs constituants, en particulier des herbicides de la famille des isoxazoles, du fait de la présence de sels particuliers des herbicides de la famille du glyphosate, en particulier du sel d'isopropylamine du glyphosate, et de certains activateurs biologiques nécessaire à l'activité des herbicides de la famille du glyphosate, en particulier les activateurs les plus couramment employés dans les formulations commerciales des herbicides de la famille du glyphosate comme par exemple les amines grasses éthoxyléess.

La présente invention vise à résoudre ce problème technique permettant de réaliser une composition stable concentrée en herbicides de la famille du glyphosate et en herbicides de la famille des isoxazoles comprenant également une quantité appropriée d'activateurs biologiques nécessaires à l'activité des herbicides de la famille du glyphosate.

La présente invention concerne donc une nouvelle composition comprenant un herbicide de la famille du glyphosate, un herbicide de la famille des isoxazoles et un activateur biologique, dans laquelle l'herbicide de la famille du glyphosate est choisi parmi la N-phosphométhylglycine (glyphosate acide), les sels de métaux alcalins de la N-phosphométhylglycine, les sels d'ammonium de la N-phosphométhylglycine et les sels de triméthylsulfonium de la N-phosphométhylglycine (sulfosate), et dans laquelle l'activateur biologique est essentiellement constitué par du sulfate d'ammonium.

Selon un mode préférentiel de réalisation de l'invention, les herbicides de la famille des isoxazoles sont choisis parmi les composés de formule générale (I) 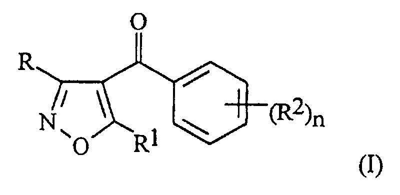 dans laquelle
R est un hydrogène ou un radical -CO₂R³;
R¹ est un radical alkyle en C₁₋₆ ou un radical cycloalkyle en C₃₋₆ éventuellement substitué par un radical alkyle en C₁₋₆,
R² représente indépendamment un halogène, un groupe cyano, un groupe nitro, un radical -S(O)ₚR⁶, -(C R⁴R⁵)_{q}SOₚR⁶, -NR⁷SO₂R⁶, alkyle en C₁₋₆, haloalkyle en C₁₋₆, alkoxy en C₁₋₆ ou haloalkoxy en C₁₋₆,
ou deux groupes R² peuvent former ensemble sur des carbones adjacent du noyeau phényl auquel ils sont attachés un hétérocycle à 5 o 6 éléments, saturé ou insaturé, pouvant contenir jusqu'à 3 hétéroatomes choisi parmi l'azote, l'oxygène et le soufre, ledit hétérocycle pouvant être substitué par un ou plusieurs groupes choisis indépendamment parmi les atomes d'halogène, le groupe nitro, les radicaux -S(O)ₚR⁶, alkyle en C₁₋₄, haloalkyle en C₁₋₄, alkoxy en C₁₋₄ ou haloalkoxy en C₁₋₄, étant entendu que les atomes de soufre peuvent être présents sous la forme -SO- ou - SO₂-,
n est un entier égal à 1, 2, 3, 4 ou 5
p est égal à 0, 1 ou 2,
q est égal à 1 ou 2, étant entendu que lorsque q est égal à 2, les groupes (CR⁴R⁵) peuvent être identiques ou différents,
R³ est un radical alkyle en C₁₋₄,
R⁴ et R⁵ sont indépendamment un atome d'hydrogène ou un radical alkyle en C₁₋₄,
R⁶ est indépendamment un radical alkyle en C₁₋₄, un radical phényl ou benzyle, chaque phényle ou benzyle pouvant être substitué par un ou plusieurs substituants identiques ou différents choisis parmi les atomes d'halogène, le groupe nitro, les radicaux -S(O)ₚCH₃, alkyle en C₁₋₄, haloalkyle en C₁₋₄, alkoxy en C₁₋₄ ou haloalkoxy en C₁₋₄,
R⁷ est indépendamment un atome d'hydrogène ou un radical alkyle en C₁₋₆,
et leurs sels agrochimiquement acceptables.

Par sels agrochimiquement acceptables, on entend selon l'invention les sels de cations ou d'anions acceptables pour un usage dans le domaine de l'agriculture ou de l'horticulture, en particulier les sels connus de l'homme du métier pour un tel usage. Parmi ces sels, on citera notamment les sels d'addition à une base comprenant les sels de métaux alcalins, en particulier de sodium ou de potassium, les sels de métaux alcalinoterreux, en particulier les sels de calcium ou de magnésium, les sels d'ammonium ou d'amine, en particulier les sels de diéthanolamine, de triéthanolamine, d'octylamine, de morpholine ou de dioctylméthylamine. On citera également les sels d'addition à un acide comprenant les sels d'acides inorganiques, en particulier les hydrochlorures, sulphates, phosphates ou nitrates et les sels d'acides organiques, en particulier acétate.

Par radical alkyle, on entend selon l'invention les radicaux alkyles linéaires ou ramifiés. Les radicaux alkyle en C₁₋₄ comprennent les radicaux méthyle, éthyle, n-propyle, i-propyle, n-butyle, i-butyle et t-butyle. Les radicaux alkyle en C₁₋₆ comprennent en outre les radicaux pentyle et hexyle linéaires ou ramifiés. Cette définition s'applique également à la partie alkyle des radicaux alkoxy, haloalkyle et haloalkoxy.

Par radicaux haloalkyle ou haloalkoxy on entend selon l'invention les radicaux alkyles ou alkoxy substitués par au moins un atome d'halogène, y compris les radicaux perhalogénés où tous les hydrogènes des radicaux haloalkyl ou haloalkoxy sont remplacés par des halogènes identiques ou différents, comme par exemple le radical trifluorométhyle.

Par atome d'halogène, on entend de préférence selon l'invention les atomes de fluor, de chlore, de brome ou d'iode.

Les radicaux cycloalkyle en C₃₋₆ comprennent selon l'invention les radicaux cyclopropyle, cyclobutyle, cyclopentyle et cyclohexyle.

De manière préférentielle, R est un atome d'hydrogène ou un radical éthoxycarbonyle (CO₂CH₂CH₃), et/ou R¹ est un radical cyclopropyle et/ou n est 2 ou 3.

Lorsque n est égal à 2, les deux radicaux R² sont préférentiellement en positions 2- et 4- sur le cycle benzénique, et lorsque n est égal à 3, les trois radicaux R² sont préférentiellement en positions 2-, 3- et 4- sur le cycle benzénique.

De manière préférentielle, R2 représente indépendamment un atome d'halogène, en particulier chlore ou brome, un radical -S(O)pCH3, trifluorométhyl, alkoxy en C1-4, haloalkoxy en C₁₋₄, ou -CH₂S(O)ₚCH₃, plus préférentiellement un atome de brome, un radical méthylsulfonyle, trifluorométhyle ou méthylsulfonylméthyle.

Les composés de formule générale (I) particulièrement préférés selon l'invention comprennent les composés suivants :
5-cyclopropyl-4-(2-méthylsulfonyl-4-trifluorométhyl)benzoyl-isozaxole ;
5-cyclopropyl-4-(2-méthylsulfonyl-4-trifluorométhyl)benzoyl-isoxazole-3-carboxylate d'éthyle;
5-cyclopropyl-4-[3,4-dichloro-2-(méthylsulfényl)benzoyl]isoxazole-3-carboxylate d'éthyle ;
5-cyclopropyl-4-[4-bromo-2-(méthylsulfonylméthyl)benzoyl-isoxazole ;
5-cyclopropyl-4-(4-méthylsulfonyl-2-trifluorométhyl)benzoyl-isoxazole; et
5-cyclopropyl-4-(4-chloro-2-méthylsulfonyl)benzoylisoxazole.

Par activateur biologique essentiellement constitué par du sulfate d'ammonium, on entend selon l'invention que l'activateur biologique comprend du sulfate d'ammonium seul, ou du sulfate d'ammonium éventuellement complémenté par d'autres activateurs biologiques en quantités appropriées pour ne pas entraîner de dégradation substantielle des herbicides de la famille des isoxazoles dans la composition selon l'invention.

Par dégradation substantielle, on entend selon l'invention une dégradation de l'herbicide de la famille des isoxazoles après 14 jours à 54°C supérieure à 15% en poids par rapport au poids total en herbicide de la famille des isoxazoles dans la composition (calculé en matière active), avantageusement supérieure à 10 % en poids.

De manière préférentielle, cette quantité appropriée est inférieure à 30 % en poids par rapport au poids total en activateurs biologiques présents dans la composition selon l'invention, plus préférentiellement inférieure à 20 % en poids, encore plus préférentiellement inférieur à 15 % en poids.

Les autres activateurs biologiques peuvent être choisis parmi les activateurs biologiques des herbicides de la famille du glyphosate bien connus de l'homme du métier et largement décrits dans l'état de la technique, et leurs mélanges en toutes proportions. De préférence, ces autres activateurs biologiques seront choisis parmi
- les amines grasses en C₁₂₋₂₀ éthoxylées (5 à 30 EO) (notamment commercialisées sous les dénominations RHODAMEEN® CF/15, CF/15-H, CF/15-B ou S35 de la société RHODIA), les alcools gras en C₁₀₋₂₀ éthoxylés (5 à 30 EO) (notamment commercialisés sous les dénominations RHODASURF® 860/P ou SOPROPHOR™ ASM/30 ou M/30 de la société RHODIA) ;
- les alcoyl phosphates, notamment les alcoyl phosphates décrits dans le brevet US 5,180,414, dont le contenu est incorporé ici par référence, en particulier les alkyl (C₄₋₁₂) (éthoxy)ₙ phosphate (n étant compris entre 2 et 12), la forme acide ou ses sels de métaux alcalins, en particulier de sodium ou potassium, ou d'amines, en particulier d'isopropylamine, plus particulièrement les mélanges d'alkyl(C₄) (éthoxy)₃ phosphate et d'alkyl(C₈₋₁₀) (éthoxy)₈ phosphate, sous forme acide ou de sels de sodium, de potassium, d'ammonium ou d'ammonium quaternaire (notamment commercialisés sous les dénominations GERONOL® ARB/70, CF/Na ou CF/AR de la société RHODIA) ;
- les sulfosuccinate hémiesters, notamment les sulfosuccinate hémiesters décrits dans la demande de brevet EP 569 264, dont le contenu est incorporé ici par référence, en particulier les sulfosuccinates hémiesters d'alcools en C₆₋₁₂ éthoxylés n fois, n étant compris entre 1 et 10, de préférence compris entre 2 et 6, sous forme d'acide ou de sels de métaux alcalins, en particulier de sodium, de métaux alcalinoterreux, en particulier de calcium, et plus particulièrement l'hémiester disodique (notamment commercialisé sous la dénomination GEROPON® CF/320 de la société RHODIA), et
- les diesters de l'acide sulfosuccinique, notamment les diesters d'alcool en C₁₋₂₀, de préférence en C₆₋₁₂, éventuellement éthoxylé (1 à 10 EO), sous forme d'acide ou de sel de métaux alcalins, en particulier de sodium, de métaux alcalinoterreux, en particulier de calcium, ou d'amines substituées ou non, en particulier le dioctylsulfosuccinate de sodium (notamment commercialisé sous la dénomination GEROPON® SDS de la société RHODIA) ;
- les bétaines (notamment sous la dénomination EMERY® 6748 ou VELVETEX® OLB 50 de la société HENKEL), les imidazolines (notamment sous la dénomination HUKO25 de la société HOECHST), les arcosinates (notamment sous les dénominations HAMPOSYL™ C, O ou L de la société HAMPSHIRE CHEMICAL), les alkylpolyglycosides ou APG (notamment APG 325 CS ou 600 CS de la société HENKEL), les éther sulfates (notamment WITCOLATE™ 1050 ou TLS 500 de la société WITCO), les dérivés de chlorure d'ammonium (notamment EMCOL® CC-RP de société WITCO) ou les dérivés d'amidoamine polyalcoxylée (notamment AMAM de la société RHODIA, tels que décrits dans la demande de brevet FR 2 737 390).

Selon un mode préférentiel de réalisation de l'invention, le rapport pondéral (exprimé en poids de matière active) herbicide de la famille du glyphosate/herbicide de la famille des isoxazoles est compris entre 2/1 et 10/1, préférentiellement comprise entre 4/1 et 8/1.

De manière préférentielle, la teneur totale en herbicides exprimée par la somme pondérale (exprimé en poids de matière active) herbicides de la famille du glyphosate + herbicides de la famille des isoxazoles par kilogramme de composition est comprise entre 50 g/kg et 900 g/kg, de préférence comprise entre 200 g/kg et 600 g/kg, plus préférentiellement d'environ 500 g/kg.

De manière avantageuse, le rapport pondéral (exprimé en poids de matière active) activateur biologique/herbicide de la famille du glyphosate est compris entre 1/30 et 3/1, de préférence compris entre 1/20 et 2/1, plus préférentiellement compris entre 1/5 et 2/1.

Les compositions selon l'invention sont préférentiellement des compositions solides, pouvant se présenter sous toutes formes solides connues de l'homme du métier, et plus particulièrement les formes solides solubles ou dispersables dans l'eau, permettant par une dissolution ou une dispersion rapide dans l'eau afin d'obtenir une composition aqueuse homogène appropriée pour une application dans les champs, par arrosage ou par pulvérisation, par tout moyen approprié à la surface du champ et à la culture à traiter.

Pour favoriser la mise en solution ou la dispersion homogène des constituants essentiels de la composition selon l'invention, l'homme du métier pourra ajouter tous les dispersants appropriés connus de l'état de la technique, étant entendu qu'ils ne viennent pas modifier la stabilité chimique des constituants essentiels de cette composition définis ci-dessus. Parmi les dispersants usuels, on citera notamment les alkylnaphtalène sulfonates ou les lignosulfonates.

De manière avantageuse, la teneur en dispersants (calculée en poids par rapport au poids total de la composition) sera inférieure ou égale à 15 %, de préférence inférieure ou égale à 10 %, plus préférentiellement comprise entre 3 et 8 %.

Les compositions solides selon l'invention peuvent notamment se présenter sous forme de poudres (WP, WS), de granulés (SG, WG) ou de comprimés (TB). Les poudres, granulés ou comprimés de composition selon l'invention peuvent être obtenus par tous les moyens appropriés largement décrits dans l'état de la technique et bien connus de l'homme du métier. Il est entendu que dans la mesure où les propriétés physiques des herbicides de la famille du glyphosate et des herbicides de la famille des isoxazoles peuvent varier en fonction de la composition chimique de la matière active et de la nature des sels éventuels, l'homme du métier saura adapter au mieux les procédés usuels aux conditions particulières d'emploi des herbicides selon l'invention. Bien entendu, l'homme du métier pourra ajouter les cas échéant tout support inerte, par exemple des charges de silices, nécessaire à la formulation de la composition selon l'invention, de même que tout additif approprié (antimousse, colorant, adhésif, etc.).

Pour les compositions sous forme de poudres ou de granulés, les constituants essentiels de la composition selon l'invention peuvent être mélangés ensemble avant la mise en forme, ou mis en forme séparément puis mélangés une fois formés, comme indiqué par exemple dans la demande de brevet EP 696 168.

La présente invention concerne également un procédé de traitement agronomique de plantes tolérantes aux herbicides de la famille du glyphosate et aux herbicides de la famille des isoxazoles pour éliminer les mauvaises herbes dans lequel on applique dans un champ comprenant les dites plantes tolérantes une quantité appropriée de la composition selon l'invention définie ci-dessus.

Selon un mode préférentiel de réalisation de l'invention, la composition selon l'invention est préalablement diluée ou dispersée dans une quantité appropriée d'eau.

Les compositions selon l'invention sont particulièrement appropriées pour permettre l'application simultanée des herbicides de la famille du glyphosate et des herbicides de la famille des isoxazoles à des doses (exprimé en poids de matière active) comprises pour les herbicides de la famille du glyphosate entre environ 100 g/ha et environ 1200 g/ha, préférentiellement entre environ 100 g/ha et environ 800 g/ha, et comprises pour les herbicides de la famille des isoxazoles entre environ 20 g/ha et environ 500 g/ha, de préférence comprises entre environ 40 g/ha et 150 g/ha.

Les exemples ci-dessous viennent illustrer la présente invention, sans toutefois chercher à en limiter la portée.

### Exemple 1 : Stabilité chimique des composition avec différents activateurs

Plusieurs compositions de granulés extrudés comprenant un herbicide de la famille des isoxazoles, un herbicide de la famille du glyphosate et plusieurs activateurs Les compositions sont préparées par mélange des différents composés et extrusion selor les méthodes usuelles de la technique. La stabilité chimique des herbicides de la famille des isoxazoles est évaluée après 14 jours à 54°C, mesurée en pourcentage d'isoxazole dégradé par rapport au poids total d'isoxazole dans la composition préparée initialement.

Les herbicides de la famille des isoxazoles employés pour cet exemple et représentatifs des herbicides de la famille des isoxazoles, en particulier des herbicides définis par la formule générale (I) sont les suivants :
Compsé I : 5-cyclopropyl-4-(2-méthylsulfonyl-4-trifluorométhyl)benzoyl-isozaxole ;
Composé II : 5-cyclopropyl-4-[4-bromo-2-(méthylsulfonylméthyl)benzoyl-isoxazole ;

L'herbicide de la famille du glyphosate représentatif de la famille des herbicides de la famille du glyphosate employé pour cet exemple est le glyphosate acide.

Les adjuvants sont les suivants : Morwet™ D425 (dispersant de la société WITCO), Geronol® CF/NA sur silice (RHODIA), Geropon® SDS (RHODIA), Rhodameen® S35 (RHODIA) et sulfate d'ammonium.

Les quantités de chaque constituant sont exprimées en gramme de matière active.

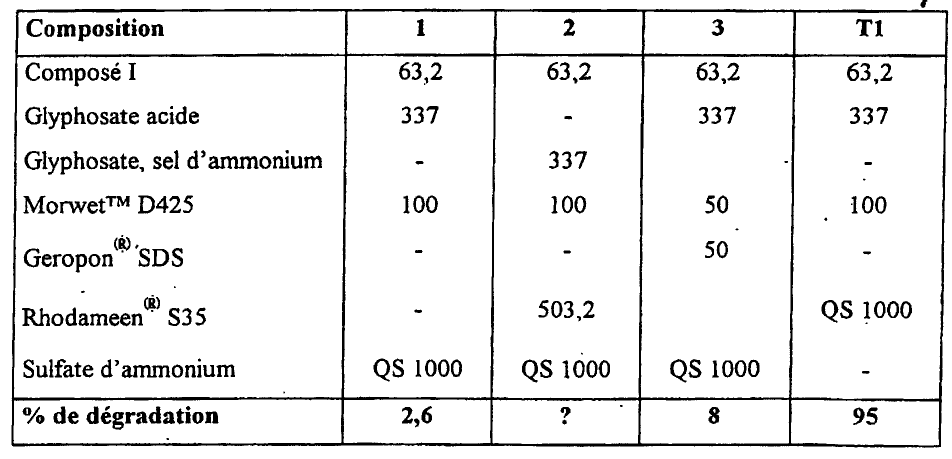

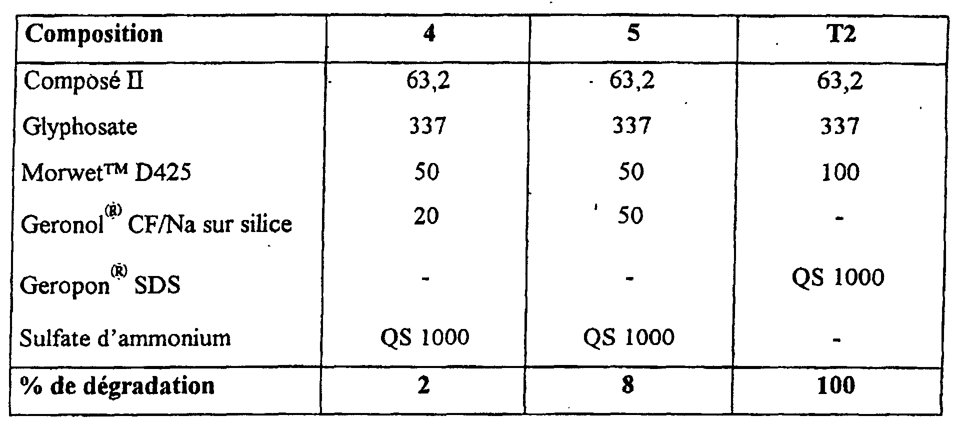

Les exemples ci-dessus montrent pour les compositions selon l'invention (compositions 1 à 5) une dégradation des herbicides de la famille des isoxazoles inférieure à 10 %, contre 95 à 100 % de dégradation en l'absence de sulfate d'ammonium (témoins T1 et T2)..

### Exemple 2 : Comprimés délitables

Les comprimés délitables sont obtenus par les méthodes usuelles de compression directe d'un prémélange de matières actives, en présence d'adjuvants usuels pour ce type de formulation, en particulier des agents désintégrants, des charges ou des lubrifiants. Les agents désintégrants sont notamment choisis parmi les dérivés de celluloses, notamment les microcelluloses cristallines, ou les dérivés d'amidons ou amidons modifiés. Les charges usuelles sont généralement des charges à base de silice ou dérivés de silice, ou encore des dérivés de sucres. Les lubrifiants usuels sont notamment choisis parmi le stéarate de magnésium, le benzoate de sodium ou encore le talc. La composition peut en outre comprendre tous adjuvants usuels comme des agents conservateurs, des colorants, parfums ou absorbeurs d'humidité.

Deux prémélanges de matières actives ont été préparés avec les compositions ci-dessous. Dans ces exemples de compositions selon l'invention, les herbicides sont d'une part le composé I défini en exemple I et le glyphosate acide. Ces deux herbicides sont représentatifs d'une part de tous les herbicides de la famille des isoxazoles et d'autre part de tous les herbicides de la famille du glyphosate selon l'invention, l'enseignement de cet exemple n'étant pas limité aux deux seuls composés décrits.

| Prémélange I : | |
|---|---|
| Composé I micronisé | 79,79 g |
| Glyphosate sel d'ammonium | 476,15 g |
| Sulfate d'ammonium | 200,00 g |
| Morwett™ D 425 | 50,00 g |

| Prémélange II : | |
|---|---|
| Composé I micronisé | 79,79 g |
| Glyphosate sel d'ammonium | 476,15 g |
| Sulfate d'ammonium | 200,00 g |
| Morwett™ D 425 | 50,00 g |
| Geronol® CF/Na | 66,60 g |

Les comprimés de composition suivante ont été préparés, les pourcentages étant exprimés en poids par rapport au poids total de la composition :

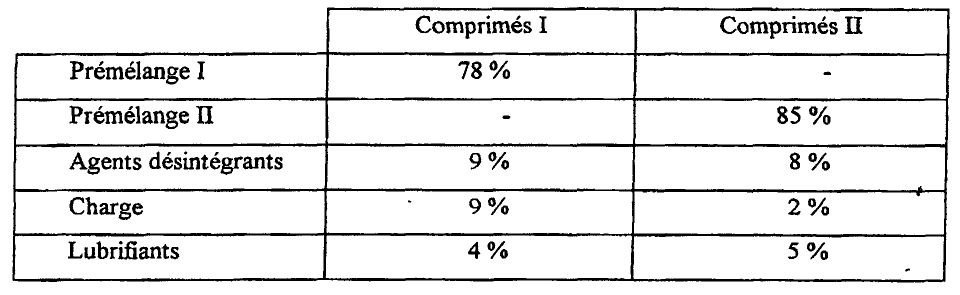

### Exemple 3 : Activité biologique.

Les compositions 1 et 2 ci-dessus ont été appliquées sur différentes espèces de mauvaises herbes à des doses équivalent à l'application de 377 g/ha de glyphosate (exprimée en glyphosate acide) et 63,2 g/ha d'isoxaflutole (composé 1). L'efficacité biologique des compositions selon l'invention a été comparée à l'application d'un mélange extemporané (Témoin)de glyphosate (sel d'isopropylamine, formulation Roundup® de la société MONSANTO) et d'isoxaflutole, correspondant à des doses de 560 g/ha de glyphosate (exprimée en glyphosate acide) et **50 g/ha d'isoxaflutole.**

Les différentes espèces traités sont les suivantes : ECHCG (Echinochloa crus galli), PANMI (Panicum miliaceum), SETFA (Setaria faberi), SETVI (Setaria viridis), HELAN (Heliantus annuus) et SORVU (Sorghum vulgare). Les mesures d'activité sont effectuées par évaluation de la phytotoxicité de la composition sur les plantes 7 jours après application (pour mesurer la vitesse d'action) et 22 jours après l'application (pour mesurer l'efficacité). Les résultats obtenus sont reportés sur le Tableau ci-dessous.

| | **ECHCG** | | **PANMI** | | **SETFA** | | **SETVI** | | **HELAN** | | **SORVU** | |
|---|---|---|---|---|---|---|---|---|---|---|---|---|
| | **7 J** | **22 J** | **7 J** | **22 J** | **7 J** | **22 J** | **7 J** | **22 J** | **7 J** | **22 J** | **7 J** | **22 J** |
| **1** | 43 | 92 | 73 | 95 | 68 | 98 | 79 | 99 | 50 | 99 | 57 | 90 |
| **2** | 43 | 97 | 70 | 93 | 69 | 98 | 81 | 99 | 43 | 92 | 56 | 90 |
| **T** | 29 | 100 | 88 | 99 | 72 | 99 | 86 | 99 | 68 | 99 | 55 | 97 |

Ces résultats montrent pour les compositions selon l'invention une efficacité et une vitesse d'action en tous points comparables à celles du mélange extemporané témoin, alors que la dose de glyphosate du mélange témoin est supérieure à celle des compositions selon l'invention.

Ces résultats viennent confirmer que la stabilité chimique observée en exemple 1 pour les compositions selon l'invention est obtenue en conservant les propriétés herbicides des constituants de cette composition et donc son efficacité.

## Revendications

1. Composition **caractérisée en ce qu'**elle comprend un herbicide de la famille du glyphosate, un herbicide de la famille des isoxazoles et un activateur biologique, dans laquelle l'herbicide de la famille du glyphosate est choisi parmi la N-phosphométhylglycine (glyphosate acide), les sels de métaux alcalins de la N-phosphométhylglycine, les sels d'ammonium de la N-phosphométhylglycine et les sels de triméthylsulfonium de la N-phosphométhylglycine (sulfosate), et dans laquelle l'activateur biologique est essentiellement constitué par du sulfate d'ammonium.

2. Composition selon la revendication 1, **caractérisée en ce que** l'herbicide de la famille des isoxazoles est choisis parmi les composés de formule générale (I) 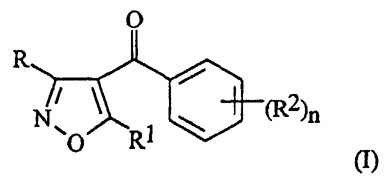 dans laquelle
R est un hydrogène ou un radical -CO₂R³;
R¹ est un radical alkyle en C₁₋₆ ou un radical cycloalkyle en C₃₋₆ éventuellement substitué par un radical alkyle en C₁₋₆,
R² représente indépendamment un halogène, un groupe cyano, un groupe nitro, un radical -S(O)ₚR⁶, -(C R⁴R⁵)_{q}SOₚR⁶, -NR⁷SO₂R⁶, alkyle en C₁₋₆, haloalkyle en C₁₋₆, alkoxy en C₁₋₆ ou haloalkoxy en C₁₋₆,
ou deux groupes R² peuvent former ensembles sur des carbones adjacents du noyeau phényl auquel ils sont attachés un hétérocycle à 5 o 6 éléments, saturé ou insaturé, pouvant contenir jusqu'à 3 hétéroatomes choisi parmi l'azote, l'oxygène et le soufre, ledit hétérocycle pouvant être substitué par un ou plusieurs groupes choisis indépendamment parmi les atomes d'halogène, le groupe nitro, les radicaux -S(O)ₚR⁶, alkyle en C₁₋₄, haloalkyle en C₁₋₄, alkoxy en C₁₋₄ ou haloalkoxy en C₁₋₄, étant entendu que les atomes de soufre pouvant être présents sous la forme -SO- ou - SO₂-,
n est un entier égal à 1, 2, 3, 4 ou 5
p est égal à 0, 1 ou 2,
q est égal à 1 ou 2, étant entendu que lorsque q est égal à 2, les groupes (CR⁴R⁵) peuvent être identiques ou différents,
R³ est un radical alkyle en C₁₋₄,
R⁴ et R⁵ sont indépendamment un atome d'hydrogène ou un radical alkyle en C₁₋₄,
R⁶ est indépendamment un radical alkyle en C₁₋₄, un radical phényl ou benzyle, chaque phényle ou benzyle pouvant être substitué par un ou plusieurs substituants identiques ou différents choisis parmi les atomes d'halogène, le groupe nitro, les radicaux -S(O)ₚCH₃, alkyle en C₁₋₄, haloalkyle en C₁₋₄, alkoxy en C₁₋₄ ou haloalkoxy en C₁₋₄,
R⁷ est indépendamment un atome d'hydrogène ou un radical alkyle en C₁₋₆,
et leurs sels agrochimiquement acceptable.

3. Composition selon l'une des revendications 1 ou 2, **caractérisée en ce que** l'herbicide de la famille des isoxazoles est choisi parmi les composés suivants :
5-cyclopropyl-4-(2-méthylsulfonyl-4-trifluorométhyl)benzoyl-isozaxole ;
5-cyclopropyl-4-(2-méthylsulfonyl-4-trifluorométhyl)benzoyl-isoxazole-3-carboxylate d'éthyle ;
5-cyclopropyl-4-[3,4-dichloro-2-(méthylsulfényl)benzoyl]isoxazole-3-carboxylate d'éthyle;
5-cyclopropyl-4-[4-bromo-2-(méthylsulfonylméthyl)benzoyl-isoxazole ;
5-cyclopropyl-4-(4-méthylsulfonyl-2-trifluorométhyl)benzoyl-isoxazole ; et
5-cyclopropyl-4-(4-chloro-2-méthylsulfonyl)benzoylisoxazole.

4. Composition selon l'une des revendications 1 à 3, **caractérisé en ce que** l'activateur biologique est constitué par du sulfate d'ammonium seul, ou du sulfate d'ammonium complémenté par d'autres activateurs biologiques en quantités appropriées pour ne pas entraîner de dégradation substantielle des herbicides de la famille des isoxazoles dans la composition selon l'invention.

5. Composition selon la revendication 4, **caractérisée en ce que** la quantité appropriée en autres activateurs biologiques est inférieure à 30 % en poids par rapport au poids total en activateurs biologiques, plus préférentiellement inférieure à 20 % en poids, encore plus préférentiellement inférieur à 15 % en poids.

6. Composition selon l'une des revendications 1 à 5, **caractérisée en ce que** le rapport pondéral (exprimé en poids de matière active) herbicide de la famille du glyphosate/herbicide de la famille des isoxazoles est compris entre 2/1 et 10/1, préférentiellement comprise entre 4/1 et 8/1.

7. Composition selon l'une des revendications 1 à 6, cractérisée en ce que la teneur totale en herbicides exprimée par la somme pondérale (exprimé en poids de matière active) herbicides de la famille du glyphosate + herbicides de la famille des isoxazoles par kilogramme de composition est comprise entre 50 g/kg et 900 g/kg, de préférence comprise entre 200 g/kg et 600 g/kg, plus préférentiellement d'environ 500 g/kg.

8. Composition selon l'une des revendications 1 à 7, **caractérisée en ce que** le rapport pondéral (exprimé en poids de matière active) activateur biologique/herbicide de la famille du glyphosate est compris entre 1/30 et 3/1, de préférence compris entre 1/20 et 2/1, plus préférentiellement compris entre 1/5 et 2/1.

9. Composition selon l'une des revendications 1 à 8, **caractérisée en ce qu'**elle se présente sous forme solide.

10. Composition selon l'une des revendications 1 à 9, **caractérisée en ce qu'**elle comprend des dispersants.

11. Composition selon la revendication 10, **caractérisée en ce que** la teneur en dispersants (calculée en poids par rapport au poids total de la composition) est inférieure ou égale à 15 %, de préférence inférieure ou égale à 10 %, plus préférentiellement comprise entre 3 et 8 %.

12. Procédé de traitement agronomiques de plantes tolérantes aux herbicides de la famille du glyphosate et aux herbicides de la famille des isoxazoles pour éliminer les mauvaises herbes , **caractérisé en ce que** l'on applique dans un champ comprenant les dites plantes tolérantes une quantité appropriée de la composition selon l'une des revendications 1 à 11.

13. Procédé selon la revendication 12, **caractérisé en ce que** la composition est préalablement diluée ou dispersée dans une quantité appropriée d'eau.

14. Procédé selon l'une des revendications 12 ou 13, **caractérisé en ce que** l'on applique de manière simultanée les herbicides de la famille du glyphosate et les herbicides de la famille des isoxazoles à des doses (exprimé en poids de matière active) comprises pour les herbicides de la famille du glyphosate entre environ 100 g/ha et environ 1200 g/ha, préférentiellement entre environ 400 g/ha et environ 800 g/ha, et comprises pour les herbicides de la famille des isoxazoles entre environ 20 g/ha et environ 500 g/ha, de préférence comprises entre environ 40 g/ha et 150 g/ha.

## Claims

1. A composition which comprises a herbicide from the glyphosate class, a herbicide from the class of the isoxazoles and a biological activator, wherein the herbicide from the glyphosate class is selected from N-phosphomethylglycine (glyphosate acid), alkali metal salts of N-phosphomethylglycine, ammonium salts of N-phosphomethylglycine and trimethylsulfonium salts of N-phosphomethylglycine (sulfosate), and wherein the biological activator consists essentially of ammonium sulfate.

2. The composition as claimed in claim 1, wherein the herbicide from the class of the isoxazoles is selected from the compounds of general formula (I) 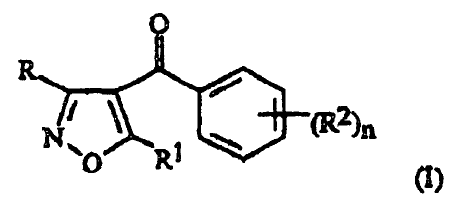 in which
R is a hydrogen or a radical -CO₂R³;
R¹ is a C₁₋₆ alkyl radical or a C₃₋₆ cycloalkyl radical optionally substituted by a C₁₋₆ alkyl radical,
R² represents independently a halogen, a cyano group, a nitro group, an -S(O)ₚR⁶, -(CR⁴R⁵)_{q}SOₚR⁶, -NR⁷SO₂R⁶, C₁₋₆ alkyl, C₁₋₆ haloalkyl, C₁₋₆ alkoxy or C₁₋₆ haloalkoxy radical,
or two groups R² may together form, on adjacent carbons of the phenyl nucleus to which they are attached, a saturated or unsaturated 5- or 6-membered heterocycle which may contain up to 3 heteroatoms selected from nitrogen, oxygen and sulfur, it being possible for said heterocycle to be substituted by one or more groups selected independently from halogen atoms, the nitro group and -S(O)ₚR⁶, C₁₋₄ alkyl, C₁₋₄ haloalkyl, C₁₋₄ alkoxy or C₁₋₄ haloalkoxy radicals, it being understood that the sulfur atoms may be present in the form -SO- or -SO₂-,
n is an integer 1, 2, 3, 4 or 5,
p is 0, 1 or 2,
q is 1 or 2, it being understood that, when q is 2, the groups (CR⁴R⁵) may be identical or different,
R³ is a C₁₋₄ alkyl radical,
R⁴ and R⁵ are independently a hydrogen atom or a C₁₋₄ alkyl radical,
R⁶ is independently a C₁₋₄ alkyl radical or a phenyl or benzyl radical, it being possible for each phenyl or benzyl to be substituted by one or more identical or different substituents selected from halogen atoms, the nitro group, -S(O)ₚCH₃, C₁₋₄ alkyl, C₁₋₄ haloalkyl, C₁₋₄ alkoxy or C₁₋₄ haloalkoxy radicals,
R⁷ is independently a hydrogen atom or a C₁₋₆ alkyl radical,
and their agrochemically acceptable salts.

3. The composition as claimed in either claim 1 or 2, wherein the herbicide from -the class of the isoxazoles is selected from the following compounds:
5-cyclopropyl-4-(2-methylsulfonyl-4-trifluoromethyl)benzoylisoxazole;
ethyl 5-cyclopropyl-4-(2-methylsulfonyl-4-trifluoromethyl)benzoylisoxazole-3-carboxylate;
ethyl 5-cyclopropyl-4-[3,4-dichloro-2-(methylsulfenyl)benzoyl]isoxazole-3-carboxylate;
5-cyclopropyl-4-[4-bromo-2-(methylsulfonylmethyl)-benzoylisoxazole;
5-cyclopropyl-4-(4-methylsulfonyl-2-trifluoromethyl)benzoylisoxazole; and
5-cyclopropyl-4-(4-chloro-2-methylsulfonyl)-benzoylisoxazole.

4. The composition as claimed in one of claims 1 to 3, wherein the biological activator consists of ammonium sulfate alone or ammonium sulfate supplemented by other biological activators in amounts which are suitable for not causing substantial degradation of the isoxazole-class herbicides in the composition of the invention.

5. The composition as claimed in claim 4, wherein the suitable amount of other biological activators is less than 30% by weight relative to the total weight of biological activators, more preferably less than 20% by weight, more preferably still less than 15% by weight.

6. The composition as claimed in one of claims 1 to 5, wherein the weight ratio (expressed by weight of active substance) of glyphosate-class herbicide/isoxazole-class herbicide is between 2/1 and 10/1, preferably between 4/1 and 8/1.

7. The composition as claimed in one of claims 1 to 6, wherein the total herbicide content, expressed by the weight sum (expressed by weight of active - substance) of glyphosate-class herbicides + isoxazole-class herbicides per kilogram of composition, is between 50 g/kg and 900 g/kg, preferably between 200 g/kg and 600 g/kg, more preferably approximately 500 g/kg.

8. The composition as claimed in one of claims 1 to 7, wherein the weight ratio (expressed by weight of active substance) of biological activator/glyphosate-class herbicide is between 1/30 and 3/1, preferably between 1/20 and 2/1, more preferably between 1/5 and 2/1.

9. The composition as claimed in one of claims 1 to 8, which is present in solid form.

10. The composition as claimed in one of claims 1 to 9, which comprises dispersants.

11. The composition as claimed in claim 10, wherein the amount of dispersants (calculated by weight relative to the total weight of the composition) is less than or equal to 15%, preferably less than or equal to 10%, more preferably between 3 and 8%.

12. A method of agronomically treating plants tolerant to herbicides from the glyphosate class and to herbicides from the class of the isoxazoles for the purpose of eliminating weeds, wherein an appropriate amount of the composition as claimed in one of claims 1 to 11 is applied in a field containing said tolerant plants.

13. The method as claimed in claim 12, wherein the composition is diluted or dispersed beforehand in an appropriate amount of water.

14. The method as claimed in either claim 12 or 13, wherein the glyphosate-class herbicides and the isoxazole-class herbicides are applied simultaneously at rates (expressed by weight of active substance) of, for the glyphosate-class herbicides, between approximately 100 g/ha and approximately 1200 g/ha, preferably between approximately 400 g/ha and approximately 800 g/ha, and for the isoxazole-class herbicides, between approximately 20 g/ha and approximately 500 g/ha, preferably between approximately 40 g/ha and 150 g/ha.

## Patentansprüche

1. Zusammensetzung, **dadurch gekennzeichnet, daß** sie ein Herbizid aus der Glyphosatfamilie, ein Herbizid aus der Isoxazolfamilie und einen biologischen Aktivator umfaßt, worin das Herbizid aus der Glyphosatfamilie unter N-Phosphonomethylglycin (saures Glyphosat), den Alkalimetallsalzen von N-Phosphonomethylglycin, den Ammoniumsalzen von N-Phosphonomethylglycin und den Trimethylsulfoniumsalzen von N-Phosphonomethylglycin (Sulfosat) ausgewählt ist und worin der biologische Aktivator im wesentlichen aus Ammoniumsulfat besteht.

2. Zusammensetzung nach Anspruch 1, **dadurch gekennzeichnet, daß** das Herbizid aus der Isoxazolfamilie unter den Verbindungen der allgemeinen Formel (I) 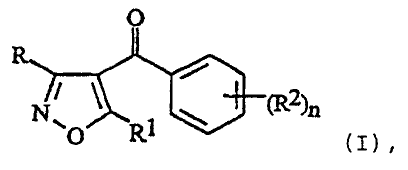 worin
R für Wasserstoff oder einen Rest -CO₂R³ steht;
R¹ einen C₁₋₆-Alkylrest oder einen C₃₋₆-Cycloalkylrest darstellt, der gegebenenfalls durch einen C₁₋₆-Alkylrest substituiert ist,
R² unabhängig voneinander ein Halogen, eine Cyanogruppe, eine Nitrogruppe, einen Rest -S(O)ₚR⁶, -(CR⁴R⁵)_{q}SOₚR⁶, -NR⁷SO₂R⁶, C₁₋₆-Alkyl, -C₁₋₆-Halogenalkyl, C₁₋₆-Alkoxy oder C₁₋₆-Halogenalkoxy darstellt,
oder zwei Gruppen R², gemeinsam mit benachbarten Kohlenstoffatomen des Phenylkerns, an die sie gebunden sind, einen 5- oder 6-gliedrigen, gesättigten oder ungesättigten Heterocyclus ausbilden können, der bis zu drei, unter Stickstoff, Sauerstoff und Schwefel ausgewählte Heteroatome enthalten kann, wobei dieser Heterocyclus durch eine oder durch mehrere Gruppen, unabhängig voneinander ausgewählt unter Halogenatomen, der Nitrogruppe, den Resten -S(O)ₚR⁶, C₁₋₄-Alkyl, C₁₋₄-Halogenalkyl, C₁₋₄-Alkoxy oder C₁₋₄-Halogenalkoxy, substituiert sein kann, wobei die Schwefelatome in Form von -SO- oder -SO₂- vorliegen können,
n eine ganze Zahl mit dem Wert 1, 2, 3, 4 oder 5 ist,
p den Wert 0, 1 oder 2 aufweist,
q den Wert 1 oder 2 hat, wobei dann, wenn q den Wert 2 aufweist, die Gruppen (CR⁴R⁵) gleich oder verschieden sein können,
R³ einen C₁₋₄-Alkylrest bedeutet,
R⁴ und R⁵ unabhängig voneinander ein Wasserstoffatom oder einen C₁₋₄-Alkylrest bedeuten,
R⁶ unabhängig voneinander für einen C₁₋₄-Alkylrest, einen Phenyl- oder Benzylrest steht, wobei jedes Phenyl oder Benzyl durch einen oder mehrere, gleiche oder verschiedene Reste, ausgewählt unter Halogenatomen, der Nitrogruppe, den Resten -S(O)ₚCH₃, C₁₋₄-Alkyl, C₁₋₄-Halogenalkyl, C₁₋₄-Alkoxy oder C₁₋₄-Halogenalkoxy, substituiert sein kann,
R7 unabhängig voneinander für ein Wasserstoffatom oder einen C₁₋₆-Alkylrest steht,
und deren agrochemisch annehmbaren Salzen ausgewählt ist.

3. Zusammensetzung nach einem der Ansprüche 1 oder 2, **dadurch gekennzeichnet, daß** das Herbizid aus der Isoxazolfamilie unter den folgenden Verbindungen ausgewählt ist:
5-Cyclopropyl-4-(2-methylsulfonyl-4-trifluormethyl)benzoyl-isoxazol;
Ethyl-5-cyclopropyl-4-(2-methylsulfonyl-4-trifluormethyl)-benzoyl-isoxazol-3-carboxylat;
Ethyl-5-cyclopropyl-4-(3,4-dichlor-2-(methylsulfenyl)benzoyl]isoxazol-3-carboxylat;
5-Cyclopropyl-4-[4-brom-2-(methylsulfonylmethyl) benzoylisoxazol;
5-Cyclopropyl-4-(4-methylsulfonyl-2-trifluormethyl)benzoyl-isoxazol; und
5-Cyclopropyl-4-(4-chlor-2-methylsulfonyl)benzoyl-isoxazol.

4. Zusammensetzung nach einem der Ansprüche 1 bis 3, **dadurch gekennzeichnet, daß** der biologische Aktivator nur aus Ammoniumsulfat besteht oder aus Ammoniumsulfat, ergänzt durch andere biologische Aktivatoren in geeigneten Mengen, um nicht einen substantiellen Abbau der Herbizide aus der Isoxazolfamilie in der erfindungsgemäßen Zusammensetzung zu ergeben.

5. Zusammensetzung nach Anspruch 4, **dadurch gekennzeichnet, daß** die geeignete Menge an anderen biologischen Aktivatoren unter 30 Gew.-% liegt, bezogen auf das Gesamtgewicht an biologischen Aktivatoren, stärker bevorzugt unter 20 Gew.-%, noch stärker bevorzugt unter 15 Gew.-%.

6. Zusammensetzung nach einem der Ansprüche 1 bis 5, **dadurch gekennzeichnet, daß** das Gewichtsverhältnis (ausgedrückt in Gewicht des aktiven Materials) von Herbizid aus der Glyphosatfamilie zu Herbizid aus der Isoxazolfamilie zwischen 2/1 und 10/1, vorzugsweise zwischen 4/1 und 8/1 liegt.

7. Zusammensetzung nach einem der Ansprüche 1 bis 6, **dadurch gekennzeichnet, daß** der Gesamtgehalt an Herbiziden, ausgedrückt als Gewichtssumme (ausgedrückt in Gewicht an aktivem Material) an Herbiziden aus der Glyphosatfamilie + Herbizide aus der Isoxazolfamilie, je Kilogramm der Zusammensetzung zwischen 50 g/kg und 900 g/kg liegt, vorzugsweise zwischen 200 g/kg und 600 g/kg, stärker bevorzugt bei etwa 500 g/kg.

8. Zusammensetzung nach einem der Ansprüche 1 bis 7, **dadurch gekennzeichnet, daß** das Gewichtsverhältnis (ausgedrückt in Gewicht an aktivem Material) biologischer Aktivator/ Herbizid aus der Glyphosatfamilie zwischen 1/30 und 3/1 beträgt, vorzugsweise zwischen 1/20 und 2/1, stärker bevorzugt zwischen 1/5 und 2/1.

9. Zusammensetzung nach einem der Ansprüche 1 bis 8, **dadurch gekennzeichnet, daß** sie in fester Form vorliegt.

10. Zusammensetzung nach einem der Ansprüche 1 bis 9, **dadurch gekennzeichnet, daß** sie Dispergiermittel umfaßt.

11. Zusammensetzung nach Anspruch 10, **dadurch gekennzeichnet, daß** der Gehalt an Dispergiermitteln (berechnet als Gewicht, bezogen auf das Gesamtgewicht der Zusammensetzung) unter oder gleich 15% beträgt, vorzugsweise unter oder gleich 10%, stärker bevorzugt zwischen 3 und 8%.

12. Verfahren zur agronomischen Behandlung von gegenüber Herbiziden aus der Glyphosatfamilie und gegenüber Herbiziden aus der Isoxazolfamilie toleranten Pflanzen zur Beseitigung von Unkräutern, **dadurch gekennzeichnet, daß** man auf ein diese toleranten Pflanzen aufweisendes Feld eine geeignete Menge der Zusammensetzung nach einem der Ansprüche 1 bis 11 aufbringt.

13. Verfahren nach Anspruch 12, **dadurch gekennzeichnet, daß** die Zusammensetzung zuvor in einer geeigneten Menge Wasser verdünnt oder dispergiert wird.

14. Verfahren nach einem der Ansprüche 12 oder 13, **dadurch gekennzeichnet, daß** man gleichzeitig die Herbizide aus der Glyphosatfamilie und die Herbizide aus der Isoxazolfamilie in Dosismengen (ausgedrückt in Gewicht Aktivmaterial) aufbringt, die für die Herbizide aus der Glyphosatfamilie zwischen etwa 100 g/ha und ungefähr 1.200 g/ha, vorzugsweise zwischen etwa 400 g/ha und ungefähr 800 g/ha liegen und für die.Herbizide aus der Isoxazolfamilie zwischen etwa 20 g/ha und etwa 500 g/ha, vorzugsweise zwischen etwa 40 g/ha und 150 g/ha liegen.
